# EUROPÄISCHE PATENTANMELDUNG

(11) **EP 3 640 474 A1**
(43) Veröffentlichungstag der Anmeldung: **22.04.2020**
(21) Anmeldenummer: 18200383.0
(22) Anmeldetag: 15.10.2018
(51) Int. Cl.: F03G 7/06, B25J 9/10, B65G 47/90, H01L 41/08

(54) **MECHANISCHES AKTORSYSTEM UND EOAT-VORRICHTUNG MIT EINEM SOLCHEN AKTORSYSTEM**

(71) Anmelder: FIPA Holding GmbH, 85737 Ismaning (DE)
(72) Erfinder: Stolze, Michael, 85656 Buch am Buchrain (DE)
(74) Vertreter: Trinks, Ole

(57) **Zusammenfassung**

Die Erfindung betrifft ein mechanisches Aktorsystem (10) zum bedarfsweisen Generieren einer zum Betätigen eines Betätigungsorgans (21, 22, 23) einer EOAT-Vorrichtung (20) benötigten Kraft. Das Aktorsystem (10) weist mindestens eine Funktionseinheit (1) auf, welche ausgebildet ist, bei Energiezufuhr ihre Abmessung in einer Vorzugsrichtung (R) der Funktionseinheit (1) reversibel zu ändern. Die Erfindung betrifft ferner eine EOAT-Vorrichtung (20), insbesondere in Gestalt eines Greifers oder eines Schneidwerkzeuges, mit mindestens einem Betätigungsorgan (21, 22, 23) und einem dem mindestens einen Betätigungsorgan (21, 22, 23) zugeordneten Aktorsystem (10).

## Beschreibung

Die vorliegende Erfindung betrifft allgemein Arbeitsorgane insbesondere für Roboter. Dazu zählen Aktoren/Effektoren, aber auch erforderliche Hilfseinrichtungen, wie Handgelenkachsen, Wechselsysteme, Fügehilfen, Schutzeinrichtungen und Sensoreinheiten.

Im Einzelnen betrifft die Erfindung mechanische Aktorsysteme zum Betätigen von Arbeitsorganen eines Roboters, wobei sich die Aktorsysteme durch ihre kleine Baugröße auszeichnen und somit für Miniatur-Arbeitsorgane eines Roboters besonders geeignet sind. Die Erfindung betrifft ferner entsprechende Arbeitsorgane eines Roboters mit einem solchen Miniatur-Aktorsystem.

Gemäß Ausführungsformen der Erfindung betrifft diese vor allem sogenannte EOAT-Vorrichtungen (EOAT = end-of-arm-tooling) insbesondere in Gestalt eines Greifers oder eines Schneidwerkzeuges mit mindestens einem Betätigungsorgan und einem dem mindestens einen Betätigungsorgan zugeordneten Miniatur-Aktorsystem.

EOAT-Vorrichtungen beispielsweise in Gestalt von Greifzangen sind allgemein aus der Greifertechnik bekannt. Üblicherweise sind derartige EOAT-Vorrichtungen pneumatisch betätigte Vorrichtungen, wie beispielsweise pneumatisch betätigte Greifzangen, wobei die Vorrichtungen ein Gehäuse aufweisen, in welchem ein in der Regel pneumatisch betätigbarer Linearantrieb ausgebildet ist. Die EOAT-Vorrichtungen weisen ferner mindestens ein Betätigungsorgan, wie beispielsweise eine Greifbacke, auf, wobei dieses mindestens eine Betätigungsorgan mit dem Linearantrieb derart gekoppelt ist, dass eine mit dem Linearantrieb erzeugte Linearbewegung in eine entsprechende Verschwenk- oder Verschiebebewegung des Betätigungsorgans umgewandelt wird.

Derartige EOAT-Vorrichtungen, wie beispielsweise Greifzangen, werden häufig im Zusammenhang mit Industrierobotern zum Handhaben verschiedenartiger Gegenstände/Teile/Werkstücke eingesetzt. Damit der Gegenstand bzw. das Teil/Werkstück einerseits sicher von dem Betätigungsorgan der EOAT-Vorrichtung bearbeitet bzw. festgehalten werden kann, ist eine maximale Zuverlässigkeit des Betätigungsorgans unumgänglich. Andererseits besteht ein zunehmender Trend dahingehend, die EOAT-Vorrichtungen und insbesondere die Betätigungsorgane der EOAT-Vorrichtungen möglichst kompakt auszuführen, wobei das Gewicht der EOAT-Vorrichtung zu reduzieren ist, damit die Vorrichtungen insbesondere auch in der Robotertechnik vielseitig eingesetzt werden können.

Ein typisches Beispiel einer solchen EOAT-Vorrichtung ist eine Greifzange, welche die Funktion des Erfassens und Haltens erfüllt und die Verbindung zwischen einem Roboterarm und dem zu bearbeitenden Werkstück herstellt. Ausschlag für eine sichere Verbindung sind dabei die Art der Wirkpaarung und die Anzahl der Kontaktebenen. Die Wirkpaarung kann über Kraft-, Form- oder Stoffpaarung erzielt werden. Beim Einsatz einer Kraftpaarung wird der Halt durch das Ausüben eines Druckes auf die Werkstückoberfläche erzeugt. Im Gegensatz hierzu erfolgt bei der Formpaarung das Halten über eine formgleiche Umschließung des Werkstückes. Diese Verfahren werden bisher von der Industrie nur in geringem Maße genutzt, wobei sich speziell bei der Mikromontage jedoch eine Änderung abzeichnet.

Der Grad einer möglichen Miniaturisierung der bekannten EOAT-Vorrichtungen ist jedoch grundsätzlich nicht beliebig erweiterbar. Ein Grund hierfür ist die Baugröße des einer EOAT-Vorrichtung zugeordneten Linearantriebs, mit Hilfe welchem das mindestens eine Betätigungsorgan der EOAT-Vorrichtung zu betätigen ist. Um zu gewährleisten, dass mit dem Linearantrieb eine hinreichend hohe Kraft erzeugt werden kann, müssen die bisher eingesetzten Linearantriebe, bei denen es sich in der Regel um pneumatisch betätigte Linearantriebe handelt, zwangsläufig eine gewisse Mindestgröße aufweisen. Darüber hinaus verhindern die notwendigen Pneumatikanschlüsse zur Versorgung des Linearantriebs eine beliebige Herunter-Skalierung der bekannten EOAT-Vorrichtungen.

Andererseits ist der Bedarf nach EOAT-Vorrichtungen in Miniaturbauform stetig anwachsend.

Auf Grundlage dieser Problemstellung liegt der vorliegenden Erfindung die Aufgabe zugrunde, eine Lösung anzugeben, mit welcher eine nahezu beliebige Miniaturisierung von EOAT-Vorrichtungen möglich wird, um somit das Leistungsspektrum von EOAT-Vorrichtungen deutlich zu erweitern.

Zur Lösung dieser Aufgabe wird erfindungsgemäß ein neuartiges mechanisches Aktorsystem für EOAT-Vorrichtungen vorgeschlagen. Im Einzelnen wird ein mechanisches Aktorsystem zum bedarfsweisen Generieren einer zum Betätigen eines Betätigungsorgans einer EOAT-Vorrichtung benötigten Kraft vorgeschlagen, wobei dieses mechanische Aktorsystem - anders als die üblicherweise eingesetzten pneumatischen Linearantriebe - eine besonders kleine Bauform aufweist und insbesondere nahezu integral in einer EOAT-Vorrichtung eingebaut werden kann. Hierzu weist das Aktorsystem mindestens eine Funktionseinheit auf, welche ausgebildet ist, bei Energiezufuhr ihre Abmessung in einer Vorzugsrichtung der Funktionseinheit reversibel zu ändern.

Mit anderen Worten, erfindungsgemäß wird ein gänzlich neuer Ansatz zum Betätigen der Betätigungsorgane einer EOAT-Vorrichtung vorgeschlagen. Im Unterschied zu einem "klassischen" Motor (elektrisch, pneumatisch oder hydraulisch), welcher aufgrund seines Arbeitsprinzips eine gewisse Mindest-Baugröße benötigt, verfügt das erfindungsgemäße Aktorsystem über eine Funktionseinheit, welche aus einem Material gebildet ist, das so beschaffen ist, dass es bei Energiezufuhr (Wärme, elektrische Energie, Licht, etc.) seine Abmessung in einer Vorzugsrichtung des Materials bzw. der Funktionseinheit reversibel ändert.

Beispielsweise ist es in diesem Zusammenhang denkbar, die mindestens eine Funktionseinheit des erfindungsgemäßen Aktorsystems aus einem Material mit Formgedächtniseigenschaften zu bilden, wobei die Funktionseinheit ausgebildet ist, bei Wärmezufuhr ihre Abmessung in der Vorzugsrichtung der Funktionseinheit reversibel zu ändern. Durch die Änderung der Abmessung der Funktionseinheit wird somit eine Kraft generiert, welche direkt oder indirekt zum Betätigen des mindestens einen Betätigungsorgans der EOAT-Vorrichtung herangezogen werden kann.

Materialien mit Formgedächtniseigenschaften wie Formgedächtnispolymere (shape-memory polymers, SMP) oder Formgedächtnislegierungen (shape-memory alloys, SMA) sind solche Materialien, die ihre Gestalt von einer fixierten temporär eingenommenen Form beim Erwärmen oberhalb einer Übergangstemperatur oder als Reaktion auf einen anderen äußeren Reiz in eine ursprünglich eingenommene (permanente) Form ändern können. Das Material wird zunächst mit konventionellen Verarbeitungsmethoden in seine permanente Form gebracht. Anschließend wird das Material deformiert und in der gewünschten temporären Form fixiert. Dieser Vorgang wird auch als "Programmieren" bezeichnet.

Die Programmierung kann zum Beispiel ein Erwärmen des Materials, eine Deformation bei hoher Temperatur und einen Abkühlvorgang oder aber eine Deformation bei niedriger Temperatur ("kaltes Verstrecken") beinhalten. Die permanente Form ist nun gespeichert, während die temporäre Form aktuell vorliegt. Durch Erwärmen des Materials auf eine Temperatur oberhalb der Übergangstemperatur kommt es zum Auslösen des Formgedächtniseffekts und somit zur Rückbildung der gespeicherten permanenten Form.

Damit die mindestens eine Funktionseinheit mit dem Formgedächtnismaterial auch zyklisch genutzt werden kann, ist gemäß einer Weiterbildung der vorliegenden Erfindung vorgesehen, dass der Funktionseinheit eine erste Elektrodeneinheit und eine zweite Elektrodeneinheit zugeordnet ist, wobei zwischen der ersten und der zweiten Elektrodeneinheit eine Polymerschicht angeordnet ist, welche ein dielektrisches Elastomer mit Formgedächtniseigenschaften umfasst. Darüber hinaus ist eine Steuereinheit vorgesehen, welche die erste und zweite Elektrodeneinheit kontaktiert. Die Steuerungseinheit ist ausgebildet, zwischen der ersten und der zweiten Elektrodeneinheit eine elektrische Spannung anzulegen, und ferner durch die erste und/oder zweite Elektrodeneinheit hindurch einen elektrischen Strom fließen zu lassen.

Bei dieser Ausführungsform des erfindungsgemäßen Aktorsystems werden zwei Eigenschaften der verwendeten Polymerschicht genutzt, die sich durch eine unterschiedliche Ansteuerung der Elektroden realisieren lassen. Wenn durch die erste und/oder zweite Elektrodeneinheit ein elektrischer Strom fließt, wird eine Widerstandsheizung realisiert. Auf diese Weise kann das Polymer zur Programmierung erwärmt werden. Die eigentliche Programmierung findet statt, indem zwischen der ersten und der zweiten Elektrodeneinheit eine elektrische Spannung und somit auch ein elektrisches Feld angelegt werden. Hierbei kommt es zu einer Verformung des dielektrischen Elastomers bzw. der entsprechenden Funktionseinheit. Nach dem Einnehmen der temporären Form wird das Polymer aktiviert, indem wiederum durch die erste und/oder zweite Elektrodeneinheit ein elektrischer Strom fließt und somit das Polymer erwärmt wird. Diese Vorgänge lassen sich wiederholen, sodass eine zyklische Nutzung des Formgedächtnispolymers als Funktionseinheit des Aktorsystems ermöglicht wird.

Allerdings ist die vorliegende Erfindung nicht auf Aktorsysteme beschränkt, bei denen die mindestens eine Funktionseinheit ein dielektrisches Elastomer oder Polymer mit Formgedächtniseigenschaften aufweist. Denkbar ist es vielmehr, dass die mindestens eine Funktionseinheit in entsprechender Weise auch mit Formgedächtnislegierungen arbeitet. Hierzu kann die mindestens eine Funktionseinheit als röhrenförmiger monolithischer SMA-Aktor ausgeführt sein, der aus einem röhrenförmigen monolithischen SMA-Substrat aus beispielsweise NiTi, CuAlNi, CuAl, CuZnAl, TiV oder TiNb hergestellt ist.

Die als röhrenförmiger monolithischer SMA-Aktor ausgeführte Funktionseinheit kann ein erstes Ende, ein zweites Ende und einen mittleren Abschnitt aufweisen und kann aus einem Substrat mit einem beispielsweise kreisförmigen, elliptischen, rechteckigen oder unregelmäßigen Querschnitt erhalten werden. Der mittlere Abschnitt bildet ein Aktormuster, welches im Verlauf des Musters vom ersten bis zum zweiten Ende seine Einheitlichkeit und elektrische Leitfähigkeit bewahrt. Das Aktormuster kann ein beliebiges Muster sein. Beispielsweise kann es ein Mäandermuster oder ein Zickzackmuster sein. Eine erste Elektrode kann an dem ersten Ende und eine zweite Elektrode an dem zweiten Ende des Aktors ausgebildet sein.

In einem Verfahren zum Betrieb eines solchen Aktors wird an den Aktor ein elektrischer Strom angelegt, der den Aktor aufheizt und auf diese Weise zu einem Verbiegen des Aktors führt.

Alternativ hierzu ist es aber auch denkbar, wenn die mindestens eine Funktionseinheit des Aktorsystems aus einem Material mit piezoelektrischen Eigenschaften gebildet ist, wobei die Funktionseinheit ausgebildet ist, bei Anlegen einer elektrischen Spannung ihre Abmessung in der Vorzugsrichtung der Funktionseinheit reversibel zu ändern, um auf diese Weise eine Kraft zu generieren, welche zum Betätigen des mindestens einen Betätigungsorgans der EOAT-Vorrichtung herangezogen werden kann.

Gemäß Ausführungsformen des erfindungsgemäßen Aktorsystems weist die mindestens eine Funktionseinheit einen elastischen weichen Polymer-Kern zwischen zwei flexiblen Elektroden auf. Liegt eine elektrische Spannung zwischen den beiden flexiblen Elektroden an, so ziehen sich die beiden Elektroden gegenseitig an und quetschen den weichen Polymer-Kern zwischen sich. Weil Polymere praktisch nicht komprimierbar sind, dehnt sich infolgedessen das Elastomer seitlich aus. Dabei entspricht diese seitliche Ausdehnung einer Veränderung der Abmessung der Funktionseinheit in der Vorzugsrichtung, sodass die dabei generierte Kraft zum Betätigen von mindestens einem Betätigungsorgan einer EOAT-Vorrichtung herangezogen werden kann.

Sinkt nun die elektrische Spannung zwischen den beiden flexiblen Elektroden, kehrt das Sandwich in seine Urform zurück. Mit anderen Worten, dann kontrahiert die mindestens eine Funktionseinheit und nimmt ihre Ursprungsform an.

In einer ähnlichen Realisierung des erfindungsgemäßen Aktorsystems kommt als Funktionseinheit eine Funktionseinheit aus elastischem Kunststoff zum Einsatz, welches nach dem Verformen wieder seine ursprüngliche Gestalt annimmt (Elastomer). Alternativ hierzu ist es aber auch denkbar, die Funktionseinheit aus dünnen, sehr flexiblen Polymer-Plastik-Folien auszubilden, wobei diese Folien beispielsweise mit elektrisch nicht-leitenden (isolierenden) Flüssigkeiten gefüllt sind. Dadurch entsteht ein hydraulisches Element, das mit einem Gel beschichtet wird, welches sehr dehnbar ist und elektrische Ladungen leitet. Beispielsweise handelt es sich hierbei um ein in Salzwasser gequollenes Gel.

Wenn nun das hydraulische Element unter elektrischer Spannung gesetzt wird, baut sich ein elektrisches Feld auf, das die verschiedenen Schichten des hydraulischen Elements durchdringt und eine elektrostatische Kraft auf die Flüssigkeit ausübt. Dadurch wird die weiche Hülle des hydraulischen Elements verformt und es ergeben sich Bewegungen bzw. es werden Kräfte generiert, die zum Betätigen des mindestens einen Betätigungsorgans einer EOAT-Vorrichtung verwendet werden kann.

Sämtliche vorstehend beschriebenen Ausführungsformen haben gemeinsam, dass die Funktionseinheit äußerst klein und im Hinblick auf ihre Abmessungen sehr flexibel ausgeführt sein kann. So sind Funktionseinheiten im Millimetergrößenbereich oder kleiner denkbar.

Dies ermöglicht es, die gesamte EOAT-Vorrichtung zu miniaturisieren. Andererseits sind die Funktionseinheiten dennoch ausgebildet, eine hinreichend hohe Kraft zu generieren, insbesondere wenn eine Vielzahl von miteinander wechselwirkender Funktionseinheiten zum Einsatz kommen.

Als weiteren Vorteil ist zu nennen, dass die EOAT-Vorrichtungen nicht mehr mit Pneumatikleitungen verbunden sein müssen; vielmehr genügt zur Energieversorgung der Funktionseinheiten in der Regel eine elektrische Spannungsversorgung.

Die von dem Aktorsystem generierbare Kraft zu erhöhen, ist gemäß Realisierungen der vorliegenden Erfindung vorgesehen, dass eine Vielzahl von Funktionseinheiten jeweils in ihrer Vorzugsrichtung in Reihe geschaltet ist, um somit eine faserförmige oder strangförmige Funktionsgruppe auszubilden. Bei Energiezufuhr sind alle Funktionseinheiten einer Funktionsgruppe aktivierbar, sodass sich der dadurch generierte Bewegungshub der Funktionsgruppe aus einer Summe aller Einzel-Bewegungshübe der einzelnen Funktionseinheiten der Funktionsgruppe zusammensetzt.

Alternativ oder zusätzlich hierzu ist es denkbar, wenn zwei Funktionseinheiten derart parallel zueinander angeordnet sind, dass bei Energiezufuhr die von den mindestens zwei parallel zueinander angeordneten Funktionseinheiten insgesamt generierte Kraft einer Summe der einzelnen bei Energiezufuhr von den mindestens zwei Funktionseinheiten generierbaren Kräften entspricht.

Durch die wahlweise Reihen- oder Parallelschaltung der einzelnen Funktionseinheiten kann somit das Aktorsystem an die jeweilige Anwendung speziell angepasst werden. Auch sind fein dosierbare Kräfte mit dem Aktorsystem generierbar. Beispielsweise ist es in diesem Zusammenhang auch denkbar, wenn das Aktorsystem eine erste Gruppe von Funktionseinheiten und eine zweite Gruppe von Funktionseinheiten aufweist, wobei die erste und die zweite Gruppe unabhängig voneinander jeweils durch entsprechende Energiezufuhr zu den Funktionseinheiten der jeweiligen Gruppe betätigbar sind. Die Funktionseinheit der ersten Gruppe ist beispielsweise ausgebildet, bei Energiezufuhr in der Vorzugsrichtung der entsprechenden Funktionseinheit zu kontrahieren, wobei die Funktionseinheit der zweiten Gruppe ausgebildet ist, bei Energiezufuhr in der Vorzugsrichtung der entsprechenden Funktionseinheit zu expandieren.

Andererseits ist es aber auch denkbar, wenn die Zustandsdaten einer Funktionseinheit herangezogen werden können, um eine Aussage über den Zustand eines Betätigungsorgans der EOAT-Vorrichtung treffen zu können. Dies kann dadurch realisiert werden, wenn mindestens eine Funktionseinheit als passive Sensoreinheit ausgebildet ist, welche ausgeführt ist, in Abhängigkeit einer Änderung der Abmessungen der Funktionseinheit in deren Vorzugsrichtung ein entsprechendes elektrisches Signal auszugeben, welches indikativ für den Zustand eines der Funktionseinheit zugeordneten Betätigungsorgans der EOAT-Vorrichtung ist.

Die Erfindung betrifft nicht nur ein mechanisches Aktorsystem der zuvor genannten Art, sondern auch die Verwendung eines solchen Aktorsystems als mechanischer Antrieb eines Betätigungsorgans einer EOAT-Vorrichtung.

Darüber hinaus betrifft die Erfindung eine entsprechende EOAT-Vorrichtung insbesondere in Gestalt eines Greifers oder eines Schneidwerkzeugs mit mindestens einem Betätigungsorgan und einem dem mindestens einen Betätigungsorgan zugeordneten Aktorsystem der zuvor genannten Art.

Nachfolgend werden unter Bezugnahme auf die beiliegenden Zeichnungen Ausführungsformen der vorliegenden Erfindung näher beschrieben.

Es zeigen:
- FIG. 1: schematisch eine Phasenstruktur und Phasenumwandlung einer Formgedächtnislegierung zum Beschreiben eines Wirkungsprinzips einer exemplarischen Ausführungsform des erfindungsgemäßen Aktorsystems;
- FIG. 2: schematisch die Funktionsweise einer anderen exemplarischen Ausführungsform des erfindungsgemäßen Aktorsystems;
- FIG. 3: schematisch eine erste exemplarische Ausführungsform einer EOAT-Vorrichtung mit einer Ausführungsform des erfindungsgemäßen Aktorsystems;
- FIG.4: schematisch eine zweite exemplarische Ausführungsform einer EOAT-Vorrichtung mit einer Ausführungsform des erfindungsgemäßen Aktorsystems; und
- FIG. 5: schematisch eine dritte exemplarische Ausführungsform einer EOAT-Vorrichtung mit einer Ausführungsform des erfindungsgemäßen Aktorsystems.

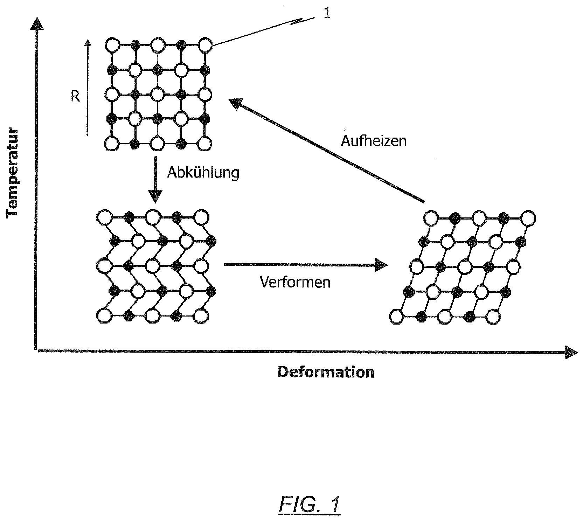

In FIG. 1 ist schematisch das Grundprinzip einer exemplarischen Ausführungsform des erfindungsgemäßen Aktorsystems 10 dargestellt. Bei dieser Ausführungsform des erfindungsgemäßen Aktorsystems 10 kommt mindestens eine Funktionseinheit 1 zum Einsatz, welche aus einer Metalllegierung mit Formgedächtniseigenschaften gebildet ist.

Formgedächtnislegierungen zeichnen sich dadurch aus, dass sie, abhängig von der Temperatur, zwei unterschiedliche Strukturen (Phasen) aufweisen. Die Formwandlung basiert damit auf der temperaturabhängigen Gitterumwandlung zu einer dieser beiden Kristallstrukturen. Es gibt in der Regel die Austenit genannte Hochtemperaturphase und den Martensit (Niedertemperaturphase). Beide können durch Temperaturänderung ineinander übergehen (Zweiwegeffekt).

Die Strukturumwandlung ist unabhängig von der Geschwindigkeit der Temperaturänderung. Zur Einleitung der Phasenumwandlung sind die Parameter Temperatur und mechanische Spannung gleichwertig; d.h., die Umwandlung kann nicht nur thermisch, sondern auch durch eine mechanische Spannung herbeigeführt werden.

Vorzugsweise wird als Material der mindestens einen Funktionseinheit 1 des erfindungsgemäßen Aktorsystems 10 eine Formgedächtnislegierung verwendet, welche sich durch den Zweiweg-Effekt an zwei Formen - eine bei hoher und eine bei niedriger Temperatur - "erinnert". Damit die Funktionseinheit 1 beim Abkühlen seine definierte Ausgangsform wieder einnimmt, muss sie durch thermomechanische Behandlungszyklen "trainiert" werden. Dies bewirkt die Ausbildung von Spannungsfeldern im Material, welche die Bildung von bestimmten Martensit-Varianten beim Abkühlen fördern. Somit stellt die trainierte Form für den kalten Zustand lediglich eine Vorzugsform des Martensit-Gefüges dar. Allerdings kann die Umwandlung der Form beim intrinsischen Zweiweg-Effekt nur stattfinden, wenn keine äußeren Kräfte entgegenwirken. Mit anderen Worten, die Funktionseinheit 1 ist beim Abkühlen nicht in der Lage, Arbeit zu verrichten.

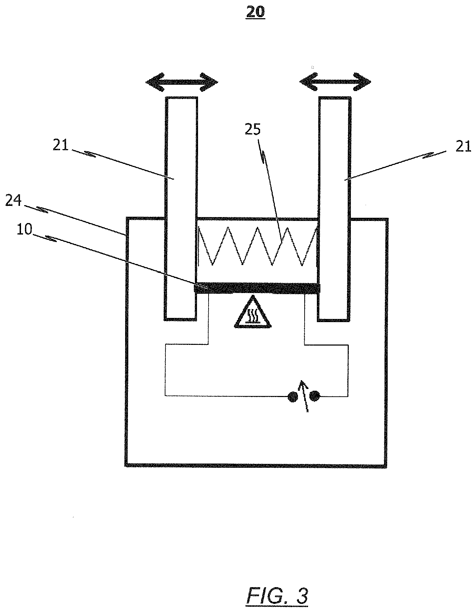

Von daher kommt gemäß Ausführungsformen der erfindungsgemäßen EOAT-Vorrichtung 20 häufig eine Rückstellfeder zum Einsatz, wie es im Zusammenhang mit den exemplarischen Ausführungsformen, die in den FIGS. 3 bis 5 gezeigt sind, näher beschrieben wird.

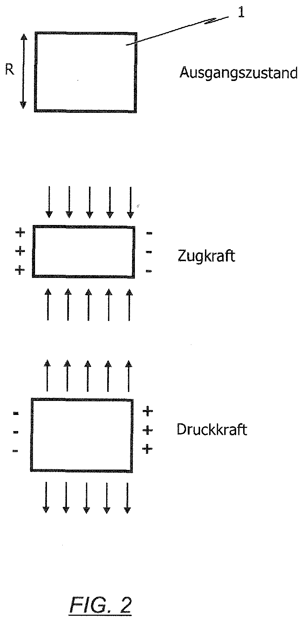

In FIG. 2 ist schematisch die Funktionsweise einer weiteren exemplarischen Ausführungsform des erfindungsgemäßen Aktorsystems 10 beschrieben. Bei dieser Ausführungsform weist das Aktorsystem 10 eine Funktionseinheit 1 auf, welche aus einem Material mit piezoelektrischen Eigenschaften gebildet ist, wobei die Funktionseinheit 1 ausgebildet ist, bei Anlegen einer elektrischen Spannung ihre Abmessung in der Vorzugsrichtung R der Funktionseinheit 1 reversibel zu ändern.

Bei dieser Funktionseinheit 1 wird der piezoelektrische Effekt ausgenutzt, welcher die Änderung der elektrischen Polarisation und somit das Auftreten einer elektrischen Spannung an Festkörpern beschreibt, wenn sie elastisch verformt werden (direkter Piezoeffekt). Damit die Funktionseinheit 1 bei Anliegen einer elektrischen Spannung eine zum Betätigen eines Betätigungsorgans benötigte Kraft generieren kann, wird bei der Funktionseinheit 1 hingegen der inverse Piezoeffekt angewandt, bei welchem sich das Material der Funktionseinheit 1 bei Anlegen einer elektrischen Spannung entsprechend verformt.

Da eine auf dem piezoelektrischen Effekt basierende Funktionseinheit 1 wahlweise unter Ausnutzung des direkten oder inversen Piezoeffekts betrieben werden kann, eignet sich diese Funktionseinheit 1 dazu, wahlweise als aktive Funktionseinheit 1 zum Generieren einer Kraft oder als passive Sensoreinheit zum Ausgeben eines entsprechenden elektrischen Signals verwendet zu werden.

FIG. 3 zeigt schematisch eine erste exemplarische Ausführungsform einer EOAT-Vorrichtung 20 gemäß der Erfindung. Die exemplarische Ausführungsform der EOAT-Vorrichtung 20 gemäß FIG. 3 ist als Parallelgreifer ausgeführt. Der Parallelgreifer weist zwei nebeneinander angeordnete Greifbackenträger 21 auf, die unter gegenseitiger Annäherung oder Entfernung unter Ausübung von Arbeitsbewegungen zwischen einer Offenstellung und einer Schließstellung relativ zueinander linear beweglich sind.

Zum Betätigen dieser Betätigungsorgane (hier: Greifbackenträger 21) ist in einem Gehäuse 24 des Parallelgreifers ein mechanisches Aktorsystem 10 gemäß der vorliegenden Erfindung angeordnet. Dieses Aktorsystem 10 weist eine Vielzahl von Funktionseinheiten auf, welche in Reihe zueinander und/oder parallel zueinander angeordnet und ausgebildet sind, bei Energiezufuhr, wie beispielsweise bei Anlegen einer elektrischen Spannung oder bei Zufuhr von Wärme, ihre Abmessung in einer Vorzugsrichtung R der Funktionseinheiten reversibel zu ändern.

Bei dem in FIG. 3 schematisch gezeigten Ausführungsbeispiel entspricht die Vorzugsrichtung R der Funktionseinheiten des mechanischen Aktorsystems 10 der Bewegungsrichtung der Greifbackenträger 21.

Als Funktionseinheiten kommen unterschiedliche Bauformen und Funktionsprinzipien in Frage. Beispielsweise können die Funktionseinheiten des Aktorsystems 10 aus einem Material mit Formgedächtniseigenschaften gebildet sein, dessen Funktionsprinzip zuvor unter Bezugnahme auf die Darstellung in FIG. 1 beschrieben wurde. Alternativ oder zusätzlich hierzu ist es aber auch denkbar, wenn die Funktionseinheiten auf dem piezoelektrischen Effekt basieren, wie es zuvor unter Bezugnahme auf die Darstellung in FIG. 2 erläutert wurde.

Grundsätzlich ist es aber auch denkbar, wenn als Funktionseinheiten eine Vielzahl von jeweils zwischen zwei flexiblen Elektroden angeordneten elastischen Polymerkernen zum Einsatz kommen, wobei beim Anlegen einer elektrischen Spannung an die jeweiligen Elektroden diese sich gegenseitig anziehen und den weichen Polymerkern in Richtung der Vorzugsrichtung R der Funktionseinheit 1 drücken.

Insbesondere ist es von Vorteil, wenn das mechanische Aktorsystem 10 eine Vielzahl von parallel und/oder in Reihe geschaltete Funktionseinheiten aufweist, um so die bei Energiezufuhr generierbare Kraft zu erhöhen bzw. den Bewegungshub zu vergrößern.

Bei der in FIG. 3 schematisch dargestellten Ausführungsform der erfindungsgemäßen EOAT-Vorrichtung 20 kommt eine Rückstellfeder 25 zum Einsatz, welche die Greifbackenträger 21 in ihre Ausgangsposition zurückführt, sobald die Funktionseinheiten des Aktorsystems 10 nicht mehr mit elektrischer Spannung beaufschlagt sind.

Anstelle einer derartigen mechanischen Rückstellfeder 25 ist es aber auch denkbar, wenn das Aktorsystem 10 erste Funktionseinheiten aufweist, die bei Energiezufuhr eine Kraft erzeugen, welche die Greifbackenträger 21 des Parallelgreifers in ihre Offenstellung bewegt, wobei das Aktorsystem 10 ferner zweite Funktionseinheiten aufweist, die bei Energiebeaufschlagung eine Kraft erzeugen, welche die Greifbackenträger 21 in ihre Schließstellung bewegen.

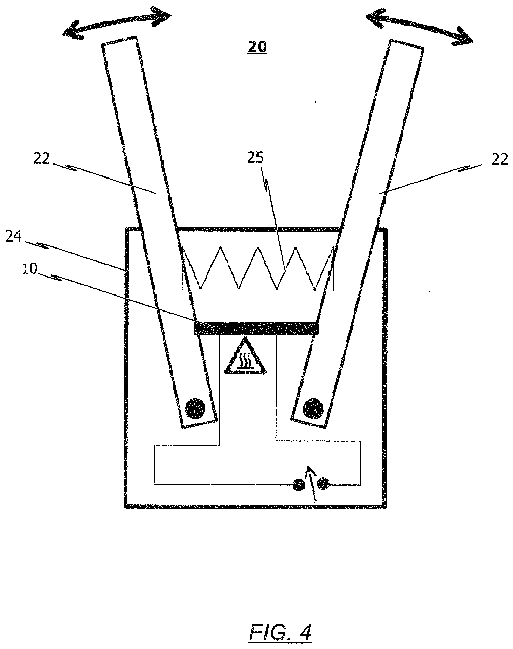

In FIG.4 ist eine zweite exemplarische Ausführungsform der erfindungsgemäßen EOAT-Vorrichtung 20 schematisch dargestellt. Bei dieser zweiten exemplarischen Ausführungsform ist die EOAT-Vorrichtung 20 als Greifzange ausgeführt. Die Greifzange weist ein Gehäuse 24 auf, in welchem eine Ausführungsform des erfindungsgemäßen Aktorsystems 10 aufgenommen ist. Die Greifzange weist ferner eine erste und eine zweite Greifbacke 22 auf, die jeweils um eine Drehachse relativ zu dem Gehäuse 24 verschwenkbar gelagert sind. Dabei sind die erste und die zweite Greifbacke 22 mit dem in dem Gehäuse 24 integrierten Aktorsystem 10 derart gekoppelt, dass eine mit dem Aktorsystem 10 erzeugte Linearbewegung in eine Verschwenkbewegung jeweils der ersten und zweiten Greifbacke 22 in einer Öffnungs- oder Schließrichtung der Greifbacken 22 umgewandelt wird.

Wie auch bei dem in FIG. 3 schematisch dargestellten Ausführungsbeispiel der erfindungsgemäßen EOAT-Vorrichtung 20 kommt bei der Greifzange gemäß FIG. 4 ebenfalls eine Rückstellfeder 25 zum Einsatz, um die Greifbacken 22 in ihre Schließstellung zurückzuführen, wenn die Funktionseinheiten des Aktorsystems 10 nicht mit Energie beaufschlagt werden.

Selbstverständlich ist es auch bei dieser Ausführungsform denkbar, auf eine derartige Feder 25 zu verzichten und erste bzw. zweite Funktionseinheiten vorzusehen, die bei Betätigung Kräfte in entgegengesetzte Richtungen generieren.

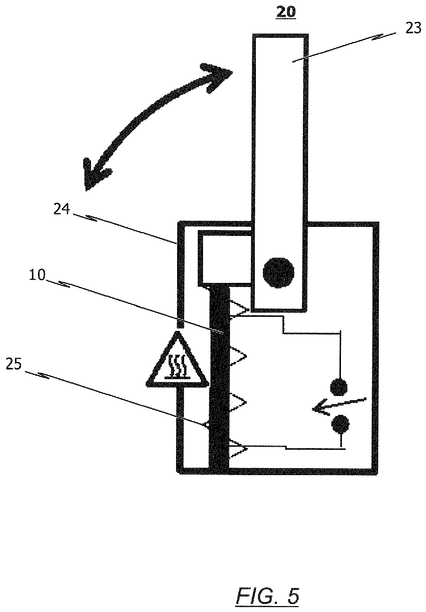

In FIG. 5 ist eine dritte exemplarische Ausführungsform der erfindungsgemäßen EOAT-Vorrichtung 20 schematisch gezeigt. Hierbei handelt es sich um einen Greiffinger, welcher als Betätigungsorgan ein Greifmittel 23 aufweist, das dazu ausgelegt ist, innerhalb eines Schwenkbereichs zwischen einer geöffneten Position und einer geschlossenen Position verschwenkt zu werden. In der geöffneten Position kann der Greiffinger an einen zu greifenden Gegenstand herangeführt werden. Dann erfolgt eine Verschwenkung des Greifmittels in die geschlossene Position, in welcher der Greiffinger den Gegenstand greift. In diesem Zustand liegt eine Greiffläche des Greifmittels am Gegenstand an. Anschließend kann ein Transport des Gegenstandes erfolgen. Wenn der Gegenstand wieder losgelassen werden soll, wird das Greifmittel 23 wieder in die geöffnete Position verschwenkt.

Zum Betätigen des Greifmittels ist in dem Gehäuse 24 des Greiffingers ein Aktorsystem 10 gemäß der vorliegenden Erfindung integriert. Der Aufbau und die Funktionsweise dieses Aktorsystems 10 entsprechen dabei den zuvor beschriebenen Ausführungsformen.

An dieser Stelle sei darauf hingewiesen, dass die vorliegende Erfindung keinesfalls auf EOAT-Vorrichtung 20en in Gestalt von Parallelgreifern, Greifzangen oder Fingergreifern beschränkt ist. Vielmehr dienen die exemplarischen Ausführungsformen gemäß den Darstellungen in den FIGS. 3 bis 5 lediglich zur Erläuterung von Aspekten der vorliegenden Erfindung. So ist es beispielsweise auch denkbar, das erfindungsgemäße Aktorsystem 10 beispielsweise bei einem Nadelgreifer oder anderen EOAT-Vorrichtung 20en einzusetzen.

Das erfindungsgemäße Aktorsystem 10, welches beispielsweise in einem Parallelgreifer, in einer Greifzange oder in einem Greiffinger zum bedarfsweisen Generieren einer für die Betätigung eines Greiforgans notwendigen Kraft herangezogen wird, zeichnet sich insbesondere auch dadurch aus, dass dieses ausgebildet ist, Zustandsdaten der EOAT-Vorrichtung 20 aufzunehmen und entsprechende Signale an eine Auswerteeinrichtung abzugeben.

Im Einzelnen ist gemäß Ausführungsformen der vorliegenden Erfindung vorgesehen, dass das erfindungsgemäße Aktorsystem 10 mindestens eine Funktionseinheit 1 aufweist, die wahlweise oder kontinuierlich als passives Sensorsystem verwendet wird. Durch eine Änderung der Abmessung der Funktionseinheit 1 in ihrer Vorzugsrichtung R wird über das Material der Funktionseinheit 1 ein entsprechendes elektrisches Signal erzeugt, beispielsweise unter Ausnutzung des direkten Piezoeffekts. Dieses elektrische Signal ist indikativ für die von dem Aktorsystem 10 generierte Kraft bzw. der Stellung der dem Aktorsystem 10 zugeordneten Greiforgane.

Ferner kann das von der als passives Sensorelement betriebenen Funktionseinheit 1 ausgegebene Sensorsignal nicht nur zur Zustandskontrolle herangezogen werden, sondern auch dazu, um zu erfassen, ob von der EOAT-Vorrichtung 20 ein Gegenstand (Werkstück) ordnungsgemäß gegriffen wurde.

Die Erfindung ist nicht auf die in den Zeichnungen dargestellten Ausführungsformen beschränkt, sondern ergibt sich aus einer Zusammenschau sämtlicher hier in offenbarter Merkmale.

## Patentansprüche

1. Mechanisches Aktorsystem (10) zum bedarfsweisen Generieren einer zum Betätigen eines Betätigungsorgans (21, 22, 23) einer EOAT-Vorrichtung (20) benötigten Kraft, wobei das Aktorsystem (10) mindestens eine Funktionseinheit (1) aufweist, welche ausgebildet ist, bei Energiezufuhr ihre Abmessung in einer Vorzugsrichtung (R) der Funktionseinheit (1) reversibel zu ändern.

2. Aktorsystem (10) nach Anspruch 1,
wobei die mindestens eine Funktionseinheit (1) aus einem Material mit Formgedächtniseigenschaften gebildet ist, und wobei die Funktionseinheit (1) ausgebildet ist, bei Wärmezufuhr ihre Abmessung in der Vorzugsrichtung (R) der Funktionseinheit (1) reversibel zu ändern.

3. Aktorsystem (10) nach Anspruch 2,
wobei das Material ein dielektrisches Elastomer, ein dielektrisches Polymer oder eine Metalllegierung, insbesondere Nitinol, ist.

4. Aktorsystem (10) nach einem der Ansprüche 1 bis 3, insbesondere nach Anspruch 1, wobei die mindestens eine Funktionseinheit (1) aus einem Material mit piezoelektrischen Eigenschaften gebildet ist, und wobei die Funktionseinheit (1) ausgebildet ist, beim Anlegen einer elektrischen Spannung ihre Abmessung in der Vorzugsrichtung (R) der Funktionseinheit (1) reversibel zu verändern.

5. Aktorsystem (10) nach einem der Ansprüche 1 bis 4, insbesondere nach Anspruch 1, wobei die mindestens eine Funktionseinheit (1) aus einem Material auf Basis elektroaktiver Polymere gebildet ist, und wobei die Funktionseinheit (1) ausgebildet ist, beim Anlegen einer elektrischen Spannung ihre Abmessung in der Vorzugsrichtung (R) der Funktionseinheit (1) reversibel zu verändern.

6. Aktorsystem (10) nach einem der Ansprüche 1 bis 5,
wobei die mindestens eine Funktionseinheit (1) ein hydraulisches Element aus einer Vielzahl von mit einer elektrisch nicht-leitenden Flüssigkeit gefüllten flexiblen Polymer-Folien aufweist, und wobei das hydraulische Element mit einem dehnbaren und elektrische Leitung leitenden Gel beschichtet ist.

7. Aktorsystem (10) nach einem der Ansprüche 1 bis 6,
wobei eine Vielzahl von Funktionseinheiten (1) jeweils in ihrer Vorzugsrichtung (R) in Reihe geschaltet ist zum Ausbilden einer faserförmigen oder strangförmigen Funktionsgruppe, wobei bei Energiezufuhr alle Funktionseinheiten (1) einer Funktionsgruppe aktivierbar sind, sodass sich der dadurch generierte Bewegungshub der Funktionsgruppe zusammensetzt aus einer Summe aller Einzel-Bewegungshübe der einzelnen Funktionseinheiten (1) der Funktionsgruppe.

8. Aktorsystem (10) nach einem der Ansprüche 1 bis 7,
wobei mindestens zwei Funktionseinheiten (1) derart parallel zueinander angeordnet sind, dass bei Energiezufuhr die von den mindestens zwei parallel zueinander angeordneten Funktionseinheiten (1) insgesamt generierte Kraft einer Summe der einzelnen bei Energiezufuhr von den mindestens zwei Funktionseinheiten (1) generierbaren Kräften entspricht.

9. Aktorsystem (10) nach einem der Ansprüche 1 bis 8,
wobei das Aktorsystem (10) eine erste Gruppe von Funktionseinheiten (1) und mindestens eine zweite Gruppe von Funktionseinheiten (1) aufweist, wobei die erste und die zweite Gruppe unabhängig voneinander jeweils durch entsprechende Energiezufuhr zu den Funktionseinheiten (1) der jeweiligen Gruppe betätigbar sind.

10. Aktorsystem (10) nach Anspruch 9,
wobei die Funktionseinheiten (1) der ersten Gruppe ausgebildet sind, bei Energiezufuhr in der Vorzugsrichtung (R) der entsprechenden Funktionseinheiten (1) zu kontrahieren, und wobei die Funktionseinheiten (1) der mindestens einen zweiten Gruppe ausgebildet sind, bei Energiezufuhr in der Vorzugsrichtung (R) der entsprechenden Funktionseinheiten (1) zu expandieren.

11. Aktorsystem (10) nach einem der Ansprüche 1 bis 10,
wobei mindestens eine Funktionseinheit (1) als passive Sensoreinheit ausgebildet ist, welche ausgeführt ist, in Abhängigkeit einer Änderung der Abmessung der Funktionseinheit (1) in deren Vorzugsrichtung (R) ein entsprechendes elektrisches Signal auszugeben.

12. Verwendung eines Aktorsystems nach einem der Ansprüche 1 bis 11, als mechanischer Antrieb eines Betätigungsorgans (21, 22, 23) einer EOAT-Vorrichtung (20).

13. EOAT-Vorrichtung (20) insbesondere in Gestalt eines Greifers oder eines Schneidwerkzeuges mit mindestens einem Betätigungsorgan (21, 22, 23) und einem dem mindestens einen Betätigungsorgan (21, 22, 23) zugeordneten Aktorsystem (10), wobei das Aktorsystem (10) ein Aktorsystem (10) nach einem der Ansprüche 1 bis 11 ist.
